(19)

**Europäisches Patentamt**
**European Patent Office**
**Office européen des brevets**

(11)   **EP 4 488 718 A1**

(12)                    **EUROPEAN PATENT APPLICATION**

(43) Date of publication:
    **08.01.2025 Bulletin 2025/02**

(51) International Patent Classification (IPC):
    **G01S 13/34** (2006.01)      **G01S 13/90** (2006.01)

(21) Application number: 23183923.4

(22) Date of filing: **06.07.2023**

(52) Cooperative Patent Classification (CPC):
    **G01S 13/9064; G01S 13/34;** G01S 13/9011;
    G01S 13/9019

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **KH MA MD TN**

(71) Applicant: **Imec VZW**
    **3001 Leuven (BE)**

(72) Inventors:
    • **JAVADI, Seyed Hamed**
      **9000 Gent (BE)**
    • **BOURDOUX, Andre**
      **4910 Theux (BE)**
    • **SAHLI, Hichem**
      **1040 Etterbeek (BE)**

(74) Representative: **Patent Department IMEC**
    **IMEC vzw**
    **Patent Department**
    **Kapeldreef 75**
    **3001 Leuven (BE)**

(54)    **A SYSTEM FOR IMAGING A MOVING TARGET BY MEANS OF AN FMCW RADAR AND A
        METHOD THEREFOR**

(57)    The present disclosure relates to a method of imaging a moving object in an environment by means of a FMCW radar configured to transmit via a plurality of transmit antennas respective FMCW radar signals comprising radar chirps and to receive via a plurality of receive antennas reflections of the respective FMCW radar signals from the environment, the method comprising: obtaining reflections of the respective FMCW radar signals; deriving, from the received reflections and the spatial diversity of the receive antennas, coherent FMCW radar signals; calculating, from the received reflections, a radial motion of the moving object observed across the FMCW radar chirps; applying an ISAR processing taking into account the estimated radial motion of the moving object to the coherent FMCW radar signals, thereby obtaining respective ISAR images of the moving object; and combining the respective ISAR images to obtain an image representation of the moving object.

FIG.1A

EP 4 488 718 A1

**Description**

**Technical Field**

The present disclosure relates to a system and a method for imaging a moving object, such as a human or an animal, by means of an FMCW radar.

**Background**

Radar-based imaging solutions of moving targets or objects, such as humans, have found numerous commercial applications thanks to their robustness in different weather and light conditions. Radar signals can penetrate through some materials so they can potentially see through certain blockades which makes them a good candidate to complement or replace the vision sensors in these commercial applications. Radars can provide high range resolutions, especially in mm-wave frequency bands and beyond, but they suffer from poor angular resolution. To deal with this drawback, imaging multiple-input-multiple-output, MIMO, radars with a large virtual antenna array with for example 200 or more virtual antennas were introduced for generating high-resolution point clouds of objects and the environment. These radar-based solutions however provide high-resolution point cloud of the moving objects which degrades significantly with distance, even after few meters away from the radar, e.g., 2-3 meters. On top of that, a large array of antennas complicates the receiver structure and demands high-performance processing resources, significantly increasing the costs.

**Summary**

An object of embodiments of the present disclosure is to provide a radar imaging system overcoming the above limitations. More specifically, embodiments of the present disclosure aim to provide a small footprint, low complexity, and cost-efficient radar system portable to different environments and capable of providing semantic information allowing to image moving objects such as humans and animals with a high precision even when the objects are located at further distances from the radar. Another object of embodiments of the present disclosure is to enable the use of such radar systems for identification, activity recognition and behaviour analysis of such moving objects and therefore their use in various applications such as automotive, public surveillance, gaming and so on.

The scope of protection sought for various embodiments of the invention is set out by the independent claims. The embodiments and features described in this specification that do not fall within the scope of the independent claims, if any, are to be interpreted as examples useful for understanding various embodiments of the invention.

The above objects are achieved, according to a first example aspect of the present disclosure, by a method for determining a posture representation of a target such as a human or an animal body, moving in an environment as defined by claim 1. In particular, the method comprises obtaining, from an FMCW radar, reflections of a respective radar signal or signals transmitted into the environment. The radar may be a single-input single-output, SISO, or a multiple-input multiple-output, MIMO, radar. The FMCW radar may thus comprise one or more transmitters configured to transmit a respective radar signal into the environment and one or more receivers configured to receive the reflections of the respective radar signals from the environment. To this end, the received reflections will comprise reflections from the targets moving in the environment, e.g., the moving human or animal body. In the case of MIMO FMCW radar, the method proceeds to derive coherent or temporally aligned FMCW radar signals from the received reflections of the FMCW radar signals, i.e., the received reflected FMCW radar signals. Next, the method proceeds to calculate, from the received reflected FMCW radar signals, a radial motion of the moving object across the radar chirps of the received reflected FMCW radar signals. That is, the radial motion of the moving target as observed by a respective antenna is calculated. As the calculation is performed on the received reflected FMCW radar signals, the calculation step can also be performed in parallel with the step of deriving the coherent FMCW radar signals. Once, both steps are completed, the method proceeds to apply inverse synthetic aperture radar, ISAR, processing to the coherent FMCW radar signals taking into account the radial motion of the target across radar chirps. Each coherent FMCW radar signal is processed to derive the range and cross-range information characterizing the body appearance of the moving target in the environment, i.e., in space, and over time for a respective receiver. Thus, the obtained range and cross-range information for a respective receiver can be represented as a series of two-dimensional images which are referred to as ISAR images. Each series of ISAR images thus holds information characterizing the body appearance in space at given times as observed by a respective receiver. Thus, depending on the location and the orientation of the moving body or the moving part or parts of the body at a given time with respect to the FMCW radar, an ISAR image may comprise information characterizing the appearance of the whole body or only part or parts of it. The method then proceeds to combine the respective ISAR images to obtain an image representation of the moving object. More specifically, corresponding images from the respective series of ISAR images are combined together, i.e., the combination is performed over time. As the series of ISAR images are obtained from the temporally aligned FMCW radar signals, combining the ISAR images allows obtaining an image representation with a significantly approved signal-to-noise ratio.

As the ISAR processing extracts the spatiotemporal information characterizing the moving body appearance while it disregards irrelevant information such as reflections from static objects, the resulting ISAR image, i.e., the resulting image representation of the moving target, comprises useful semantic information characterizing the target. Extracting this meaningful information improves the overall performance and may even lower the requirements for any subsequent data processing as required by any end-user application. For example, automotive, public surveillance or gaming applications require identification, activity recognition and behaviour analysis of the moving objects in the environment. To this end, it is critical that the image representation comprises useful semantic information characterizing the target.

In the case of SISO FMCW radar, the step of deriving and the step of combining are obsolete as there is only one received reflected FMCW radar signal. In this case, the image representation of the moving target will still comprise meaningful semantic information albeit with a lower SNR.

Further, the deriving of the coherent FMCW radar signals comprises compensating the obtained reflected FMCW radar signals for delay variations between the reflected FMCW radar signals across the receive antennas. The compensating of the obtained reflected FMCW radar signals can be performed as follows. First, the delays of arrival of the reflected FMCW radar signals across the receive antennas are estimated from the obtained reflected FMCW radar signals. The estimated delays of arrival characterize the distance between the moving object and respective receive antennas. Once the delays of arrival are estimated, the reflected FMCW radar signals are then corrected with the estimated delays of arrival by further taking into account the spatial diversity of the receive antennas. Doing so allows for temporal alignment of the FMCW radar signals received by the different antennas, or in other words to obtain coherent FMCW radar signals.

Further, the calculating of the radial motion of the moving object is performed by deriving the range of the moving object across the FMCW radar chirps of a respective reflected FMCW radar signal. In other words, the range of the moving target is derived as observed by a respective receive antenna. Calculating the range in this manner allows to obtain the radial motion of the moving object across the radar chirps.

Preferably, ISAR processing is performed in two steps. In the first step, the coherent FMCW radar signals are corrected with the estimated radial motion of the moving object to obtain coherent and motion compensated FMCW radar signals. In the second step, the resulting FMCW signals are transformed into range-Doppler domain by applying inverse Fourier transformation to obtain the range and cross-range information characterizing the body appearance in the environment, i.e., in space, over time for a respective receiver.

Preferably, the method further comprises suppressing static clutter in the respective received reflected FMCW radar signals. The suppressing comprising deriving average of chirps for respective radar frames in the respective FMCW radar signals and subtracting the average of chirps from the chirps in the respective radar frames. The suppression can further exploit a priori knowledge, such as the waveform of the respective transmitted FMCW signals and/or the shape of the moving target to be imaged. The static clutter suppression is preferably performed before deriving the coherent FMCW radar signals.

Preferably, the method further comprises selecting radar chirps from radar frames for respective received reflected FMCW radar signals. In other words, only part of the radar chirps received by a respective antenna are selected for further processing. In particular, the radar chirps received by a respective antenna are selected so that a consecutive set of radar chirps is obtained. The selection of the radar chirps can be performed by means of an objective function which aims at maximizing the contrast observed in the resulting ISAR image of the moving object. Practically, this may be implemented by ISAR processing multiple sets of radar chirps selected using pre-defined selection rules and then selecting the ISAR image with the highest image contrast. The chirps' selection is best performed after the suppression of the static clutter so that the convergence for the objective function is accelerated.

Preferably, the method further comprises suppressing noise in the image representation of the moving object. Any appropriate segmentation algorithm capable of extracting the so-called point cloud of the moving target from the background of the resulting ISAR image may be used. Preferably, a Rayleigh-based segmentation algorithm is used.

According to a second example aspect FMCW radar system is disclosed having the features of claim 11. In particular, the FMCW radar system comprises an FMCW radar having at least one transmitter configured to transmit a respective radar signal into the environment and at least one receiver configured to receive reflections of the radar signal from the environment. The reflections comprise reflections from a human or an animal body moving in the environment. The FMCW radar which emits frequency modulated continuous wave, FMCW, signal. The FMCW radar system further comprises a processing unit which is configured to perform the method according to the first example aspect. The processing unit may comprise at least one processor and at least one memory including computer program code, wherein the at least one memory and computer program code are configured to, with the at least one processor, to cause the processing unit to perform the method. In other words, the method may be completely realised as a computer implemented method. Alternatively, the FMCW radar system may comprise several such processing units configured to perform various steps of the method. For example, the FMCW radar system may comprise four such processing units, such as a compensation unit, a motion calculation unit, an ISAR processing unit, and a combination unit, respectively configured to perform the step of deriving coherent FMCW radar signal, calculating a radial motion of the moving target, applying ISAR processing to obtain ISAR images, and combining the ISAR images to obtain an image representation of the moving objects as detailed above with respect to the first example aspect.

According to a third example aspect a data processing system is disclosed having the features of claim 12. In particular, the data processing system is programmed for carrying out the method according to first example aspect.

According to a fourth example aspect a computer program product is disclosed having the features of claim 13. In particular, the computer program product comprises computer-executable instructions for causing a data processing system or an FMCW radar system to perform the method according to first example aspect.

According to a fifth example aspect a computer readable storage medium is disclosed having the features of claim 14. In particular, the computer readable storage medium comprises computer-executable instructions for performing the method according to first example aspect when the program is run on a data processing system or an FMCW radar system.

The various example embodiments of the first example aspects may be applied as example embodiments to the second, third, fourth, and fifth example aspects.

## Brief Description of the Drawings

Some example embodiments will now be described with reference to the accompanying drawings.

FIG.1A shows a block scheme of an FMCW ISAR radar system for imaging a moving object in an environment and for obtaining therefrom its posture representation according to an example embodiment of the present disclosure;

FIG.1B shows a schematic of the coordinate system in ISAR imaging;

FIG.1C shows an example of a received radar signal in range domain;

FIG.2A shows a block schematic of a method for imaging a moving object and for capturing a body representation of the moving object according to a first example embodiment of the present disclosure;

FIG.2B shows a block schematic of a method for imaging a moving object and for capturing a body representation of the moving object according to a second example embodiment of the present disclosure;

FIG.3A shows steps for obtaining ISAR images of the moving object with the method of FIG.2A;

FIG.3B shows an example result of the autofocus step of the method of FIG.2A;

FIG.3C shows steps for obtaining ISAR images of the moving object according to the method of FIG.2B;

FIG.4 shows examples of radar chirps selected from the received FMCW radar frames according to an example embodiment of the present disclosure;

FIG.5A shows examples of ISAR images of a human obtained using the FMCW radar imaging device of FIG.1A using the method of FIG.2A;

FIG.5B shows comparison of ISAR images of a human obtained using the method of FIG.2A and FIG.2B;

FIG.6 shows an example embodiment of a suitable computing system for performing one or several steps in embodiments of the present disclosure.

## Detailed Description of Embodiment(s)

The present invention relates to an ISAR radar system and a method thereof for determining a posture representation of a moving target such as a human or an animal. The ISAR radar system may employ any stationary radar capable of sensing or imaging moving targets such as humans or animals. The ISAR radar system may therefore include any unmodulated or modulated continuous wave radar, such as an FMCW radar and pulsed radars.

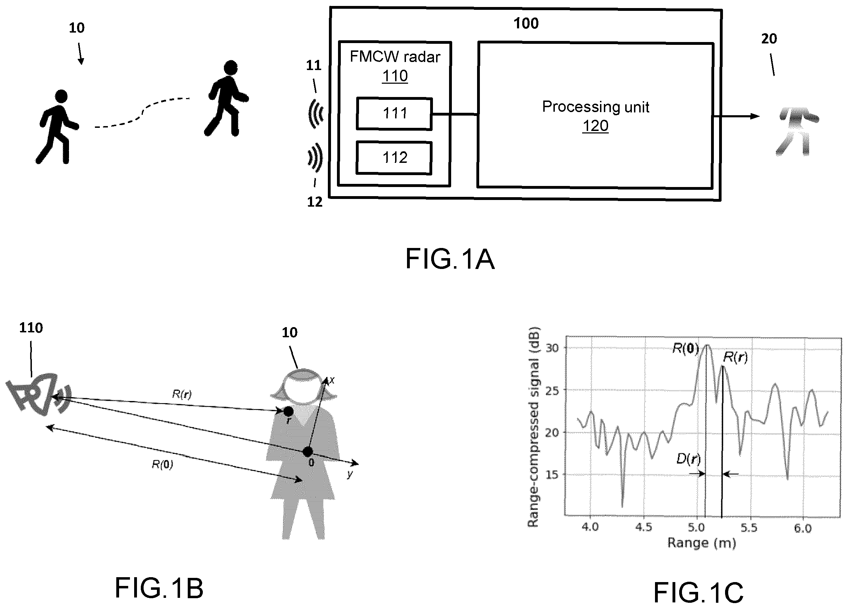

FIG.1A shows an example embodiment of the FMCW ISAR radar system 100 according to the present disclosure. The FMCW ISAR radar system comprises an FMCW radar 110 which is a stationary radar and a processing unit 120. Preferably, the FMCW radar and the processing unit are co-located. However, the processing unit may be separate from the FMCW radar. The FMCW radar 110 may be a single-input single-output, SISO, FMCW radar, as the FMCW radar has a transmitter with one transmit antenna and a receiver with one receive antenna. The TX transmitter 111 transmit or emit FMCW radar signal 11. The transmitted FMCW radar signal 11 travel through the environment until it reaches the reflecting objects, i.e., any static and/or moving targets within field of view of the radar. When the transmitted signal reaches the reflecting objects, it gets reflected towards the receiver. The reflected signals travel back through the environment until they reach the receiver. The RX receiver 112 thus receive reflected FMCW radar signals 12. For simplicity, only one reflecting object, i.e., a moving target which is a walking person 10, and no static objects are shown in this figure.

The received reflected FMCW radar signals are then fed to the processing unit 120 which processes them by applying an inverse synthetic aperture radar, ISAR, imaging algorithm to obtain one or more ISAR images of the moving target or targets 10. The processing unit 120 may further process the ISAR images by means of various algorithms suitable for deriving at least one of an action detection, activity recognition and behaviour analysis of the moving target. The FMCW ISAR radar system 100 is thus a system capable of imaging the moving target or targets, which enables its further augmentation for various applications.

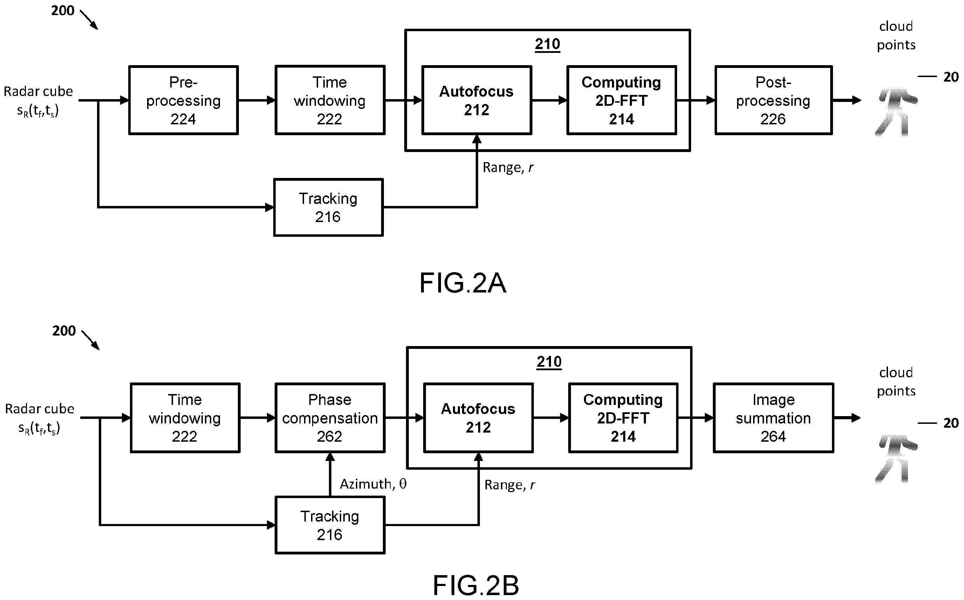

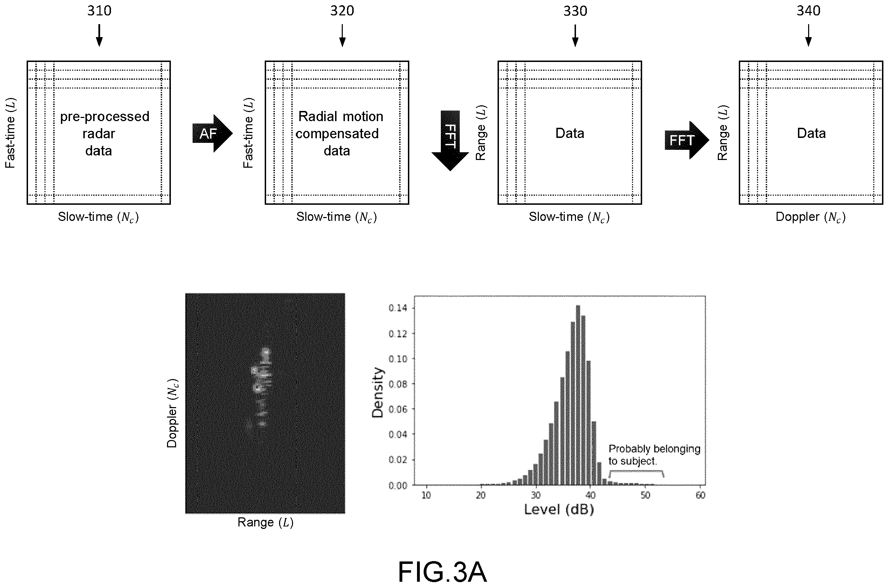

The processing of the received signals according to this example embodiment will be now described with reference to FIG.1B, FIG.1C, FIG.2A and FIG.3A, wherein FIG.1B shows a schematic of the coordinate system in ISAR imaging, FIG.1C shows an example of such received radar signal in the range domain, FIG.2A shows a block schematic of the method for imaging a moving target and for determining its posture representation and FIG.3A shows steps for obtaining ISAR images of the moving target in more detail according to an example embodiment of the present disclosure.

For the SISO FMCW ISAR system 100 of FIG.1A, the FMCW signal 11 transmitted by the FMCW radar transmitter 111 comprises FMCW radar frames which duration corresponds to the duration of the so-called coherent processing interval, CPI. Each radar frame comprises $Nc$ chirps with each chirp being a continuous wave signal with frequency starting from $fc$ and linearly increasing to $fc + B$ with $B$ being the radar's bandwidth. Accordingly, the FMCW chirp signal within a radar frame can be expressed as:

$$s_{chirp}(t) = a_c \exp \left[ j2\pi \left( f_c + \frac{\alpha}{2} t \right) t \right] \Pi \left( {t}/{T_c} \right) \qquad (1)$$

, where $a_c$ and $Tc$ respectively denote the amplitude and the period of the chirp, $\alpha$ is frequency slope of the chirp, and $\Pi \left( {t}/{T_c} \right)$ equals to 1 for $0 < t < Tc$ and zero elsewhere. Therefore, the radar signal 11 $s_T(t)$ within a coherent processing interval, CPI, transmitted by the transmitter 111 can be represented as:

$$s_T(t) = a_c \sum_{n=0}^{N_c-1} \exp \left[ j2\pi \left( f_c + \frac{\alpha}{2} t_f \right) t_f \right] \Pi \left( {t_f}/{T_c} \right) \qquad (2)$$

in which $t_f \triangleq t - nT_c, n \in \{0, \dots, N_c - 1\}$ is commonly referred to as the fast time.

The signal received 12 $s_R(t)$ by the receiver 112 can thus be modelled as the integration of the FMCW transmit signal reflected back from all reflecting points or scatterers on the target with round-trip time $\tau_r$, i.e.:

$$s_R(t) = \sum_{n=0}^{N_c-1} \int \sigma(\mathrm{r}) \times \exp \left[ j2\pi \left( f_c + \frac{\alpha}{2} (t_f - \tau_r) \right) (t_f - \tau_r) \right] dr \qquad (3)$$

, wherein $\sigma(\mathrm{r})$ denotes the target's reflectivity and the integration is computed over all scatterers of the target, i.e., $r \in$ Target, with the FMCW radar system gain and the propagation effects being included in $\sigma(\mathrm{r})$ for convenience. Note that for simplicity reasons in this example only one reflecting object, i.e., object 10, is considered present within the field of view of the radar system.

The signal $s_R(t)$ received by the receiver 112 is then demodulated with a copy of the transmitted signal $s_T^*(t)$ which produces the beat signal $s_B(t)$, which can be expressed as follows:

$$s_B(t) = s_T^*(t) s_R(t) = \sum_{n=0}^{N_c-1} \int \sigma(\mathrm{r}) \exp \left[ -j2\pi\tau_r \left( f_c + \alpha t_f - \frac{\alpha}{2} \tau_r \right) \right] dr \qquad (4)$$

, where $s_T^*(t)$ is the complex conjugate of $s_T(t)$. The maximum unambiguous range of the radar is given by

$$R_{max} = \frac{cF_s}{2\alpha}$$

with $Fs$ and $c$ being the sampling rate and the light speed, respectively. This gives

$$\frac{\alpha}{2}\tau_r = \frac{cF_s}{R_{max}} \times \frac{2R(r)}{c} = \frac{R(r)}{R_{max}}F_s$$

where $R(r)$ is the range of the scatterer r with respect to the radar. This implicates

that term $\frac{\alpha}{2}\tau_r$ is negligible compared to $f_c$, especially since $F_s$ is in the range of at most several MHz. Therefore, the beat signal $s_B(t)$ can be approximated as:

$$s_B(t) \approx \sum_{n=0}^{N_c-1} \int \sigma(r) \exp\left[-j\frac{4\pi}{c}\left(f_c + \alpha t_f\right)R(r)\right]dr. \tag{5}$$

Note that the range dependency on time is not shown in Equation (5) for the sake of brevity. Further, note that this step is not shown in FIG.2A and FIG.3A for simplicity.

Equation (5) forms the basis of the ISAR imaging algorithm that will be elaborated now below.

With the ISAR imaging algorithm, the goal is to estimate the reflectivity of the moving target 10 using the signals received by the stationary FMCW radar 110. To this end, it is assumed that the moving target 10 is located within the field of view of the FMCW radar 110. Further, it is assumed a coordinate system is located on the target 10, as shown in FIG.1B. Here, $y$ indicates the range dimension which is in the direction of the radar 110 line of sight, RLOS, and $x$ denotes the cross-range dimension. The distances from the radar 110 to the coordinate origin 0 and to the scatterer $r$, i.e., a reflective point located on the moving target 10, are respectively given by $R(0)$ and $R(r)$. In other words, a moving target is seen by the FMCW ISAR system 110 as a collection of reflective points or scatterers. Without loss of generality, it is assumed that the target 10 has an effective rotation around $z$ axis perpendicular to the $x$ - $y$ plane, with possibly variable rotational rate $\omega$. Note that the $x$ - $y$ plane always remains perpendicular to the rotation axis if it changes. In other words, axis $y$ is always in the RLOS direction, but the direction of $x$ depends on the effective rotation axis. By defining relative range

$$D(r) \triangleq R(r) - R(0)$$

as shown in FIG.1C, in which $R(0)$ is the distance of the target coordinate origin 0 from radar, the target movement can be divided into radial or translational movements, with translational or radial movement indicated by $R(0)$ and rotational movement by $D(r)$.

The beat signal can thus be expressed as a collection of radar data 310 in the form of slow time $t_s$ and fast time $t_f$ array, i.e., as:

$$\begin{aligned}
s_B(t_f, t_s) = &\exp\left[-j\frac{4\pi}{c}\left(f_c + \alpha t_f\right)R_0(t_s)\right] \times \\
&\sum_{n=0}^{N_c-1} \int \sigma(r) \exp\left[-j\frac{4\pi}{c}\left(f_c + \alpha t_f\right)D(r)\right]dr
\end{aligned} \tag{6}$$

The radar data 310 may be represented in the form of a two-dimensional data array of size $N_c \times L$, where $N_c$ is the number of received chirps per radar frame and $L$ is the number of samples per chirp.

In Equation (6), the radial or rotational movement $R_0(t_s)$ of the target is assumed to change only in slow time. In other words, the target radial motion is assumed to be negligible during fast time. This assumption is practically applicable since the chirp duration of commercial off-the-shelf FMCW radars for the applications targeted by the present disclosure is short, e.g., less than 1ms. For example, in a radar with a range resolution less than 6cm, the radial motion of any moving target of less than 200kph can be easily neglected during each chirp.

This assumption allows to perform the ISAR imaging algorithm 210 by first compensating for the radial motion of the target observed in slow time to keep the target in a fixed range and then to perform the conversion of the radar data into a range and cross-range information while the target slightly rotates, i.e., to perform image reconstruction by converting the radar data into a series of two-dimensional images, i.e., ISAR images, characterizing the location of all reflecting points or scatterers on the moving target in the environment as observed by the radar over time.

The method performed by the processing unit 120, thus, first proceeds to perform step 212, to compensate for the radial motion. This step can also be referred to as an autofocus as the step resembles the focusing when taking pictures with a photo camera, but here the focusing is done automatically. With the radial motion compensation, a motion compensated beat signal $s_c(t_f, t_s)$ is created which can be expressed by:

$$s_C(t_f, t_s) \triangleq s_B(t_f, t_s) \exp\left[j\frac{4\pi}{c}(f_c + \alpha t_f)R_0(t_s)\right]. \qquad (7)$$

As mentioned above, the goal of the motion compensation is to keep the target range to the radar $R_0(t_s)$ during slow time unchanged, or more accurately, to keep the changes limited to less than the size of a range bin. Using the notation of FIG.1B, $D(r)$ denoting the size of vector $r = (x,y)$ projected on RLOS, i.e., iso-range assumption, $D(r)$ can be expressed as $D((x,y),t_s) = x\ sin(\omega t_s) + y\ cos(\omega t_s)$ which can be approximated by $D((x,y),t_s) \approx x\omega t_s + y$ for sufficiently small processing times, i.e., small $t_s$, or small rotation rates $\omega$. The compensated beat signal $s_c(t_f, t_s)$ can be then given by:

$$s_C(t_f, t_s) = \sum_{n=0}^{N_c-1} \int_{x,y} \sigma(x,y) \exp\left[-j\frac{4\pi}{c}(f_c + \alpha t_f)(y + x\omega t_s)\right] dx dy. \qquad (8)$$

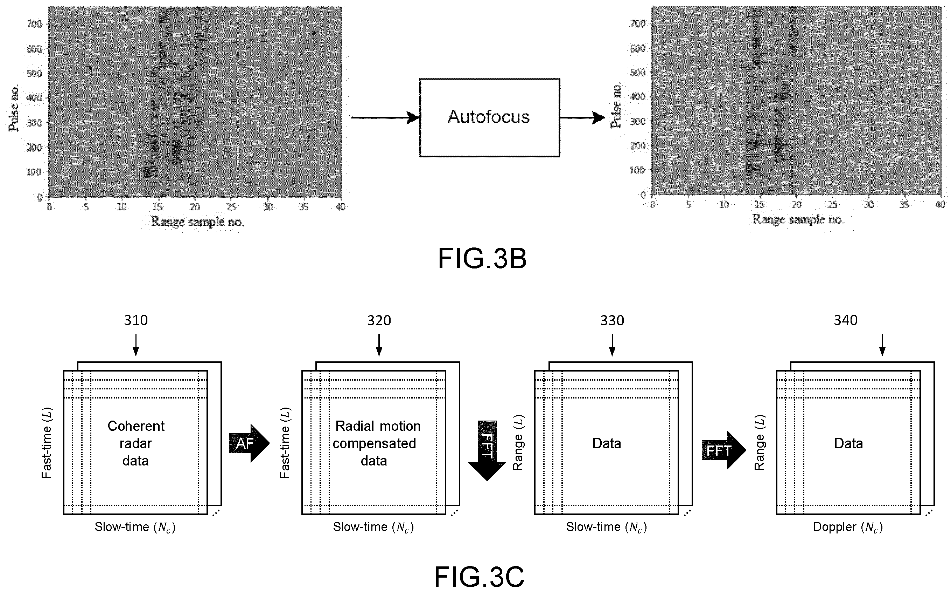

In practice, the compensation of the target's radial motion can be performed by means of either parametric or non-parametric optimization algorithms. The parametric algorithms employ a parametric motion model which is optimized using an objective function, e.g., the image contrast, or the image Entropy. On the other hand, the non-parametric algorithms, such as dominant scatterer autofocus, DSA, and phase gradient algorithm, PGA, attempt to compensate the radial motion phase by finding the dominant scatterers of the target based on which the compensation phase is estimated. Any of these methods provides substantially same result albeit with some variations in the computation complexity. Herein, the radial motion compensation is performed by means of the image-contrast-based autofocus, ICBA, algorithm as described in M. Martorella, et. al., "Contrast maximisation-based technique for 2D ISAR autofocusing," IEE Proceedings - Radar, Sonar and Navigation, vol. 152, pp. 253-262(9), August 2005 as it is a flexible algorithm in terms of computation. The result of the autofocusing is shown in FIG.3B. In simple words, in the ICBA algorithm, the motion of the coordinate origin in slow time is modelled by:

$$R_0(t_s) = r + \beta' t_s + \gamma' t_s^2 \qquad (9)$$

, where $r$ is the initial range of the origin, $\beta'$ is the radial velocity of the target, and $\gamma'$ relates to the target radial acceleration.

Therefore, as the initial range $r$ in the compensation term given by $e^{j\frac{4\pi}{c}(f_c + \alpha t_f)R_0(t_s)}$ produces no term dependent on slow time, it can be ignored in the optimization. Instead, the initial range $r$ impacts the image shifting in the range direction and therefore needs to be estimated.

The estimation of the initial range $r$ is done in step 216 by means of any suitable for the purpose tracking algorithm. For example, the well-known multiple hypothesis tracking, MHT, algorithm or Gaussian mixture probability hypothesis density, GM-PHD, tracking algorithm can be employed. By replacing the slow time $t_s$ with the chirp number $n$ by $t_s = nT_c$ and by defining $\beta \triangleq \beta' T_c$ and $\gamma \triangleq \gamma' T_c$, the motion of the coordinate origin in slow time can now be expressed as:

$$R_0(n) = r + \beta\eta + \gamma\eta^2 \qquad (10)$$

Replacing $t_s$ with $n$ facilitates limiting the search space for the parameters in the ICBA algorithm which is a parametric optimization algorithm to grids in just one period equal to $\dfrac{c}{2(f_c + \alpha t_f)}$. The objective function, i.e., the image contrast, IC, is defined as the normalized ISAR image variance:

$$IC(I) \triangleq \sqrt{\frac{mean\{(I - mean(I))^2\}}{mean(I)}} \qquad (11)$$

, where I is the image intensity. Accordingly, the autofocus parameters or the radial motion compensation parameters are derived by maximizing IC objective function of Equation (11).

To this end, the tracking step 216 is to be performed prior to the autofocusing step 212 since the initial range r of moving target is required to perform correctly the autofocusing step, i.e., to keep the moving target within the same range, and therefore be also considered as forming part of the ISAR imaging algorithm 210. Considering the initial range in the autofocusing step allows to localize the moving target in the reconstructed ISAR image correctly.

After the autofocusing step 212, the method proceeds to convert the motion compensated radar data into range and cross-range information, i.e., to perform the image reconstruction 214. By defining $t'_f = f_c + \alpha t_f$ as the carrier frequency corresponding to each fast time sample, and $\eta \triangleq \frac{2y}{c}$ and $v \triangleq \frac{2f_c}{c} x\omega$ as the spatial frequencies in Equation (8) above, the resulting motion compensated FMCW radar signal can again be represented as a radar data in slow and fast times 320 and mathematically can be expressed as:

$$s_C\left(t'_f, t_s\right) = \sum_{n=0}^{N_c-1} k \int \sigma(\eta, v) \, \exp\left[-\mathrm{j}2\pi\left(\eta t'_f + v t_s\right)\right] d\eta dv. \qquad (12)$$

, where k is a constant due to variable change. Equation (12) makes it clear that the ISAR image of the moving target, namely its reflectivity, can be reconstructed by simply a 2D inverse Fourier transform, 2D-IFT, of the beat signal $s_B(t_f, t_s)$ once the target's radial motion has been compensated, i.e., $s_c$. Thus, the step of image reconstruction 214, merely requires applying inverse Fourier transform to the motion compensated radar data to obtain the ISAR image of the moving target.

Equations (8) and (12) thus provide the ISAR processing 210 for a SISO FMCW radar with the reconstructed image $\sigma(\eta, v)$ in time-Doppler domain which can be expressed as:

$$\sigma(\eta, v) = \text{2D-IFT}\left[s_B\left(t_f, t_s\right)e^{j\frac{4\pi}{c}(f_c+\alpha t_f)R_0(t_s)}\right]. \qquad (13)$$

, wherein $\eta = \frac{2y}{c}$ and $v = \frac{2f_c}{c} x\omega$ indicate the time and Doppler, respectively.

The reconstructed image thus comprises the range and cross-range information given in time-Doppler domain. The reconstructed image can be also transformed into spatial domain. The information in the time domain can be converted to the range dimension by $y = \frac{2\eta}{c}$ , [m]. However, transforming cross-range information from Doppler to spatial domain requires estimating the effective rotation rate $\omega$ of the moving target which is unknown. Though there are several known algorithms to estimate the rotation rate, they are computationally heavy and prone to errors. For this reason, the ISAR image converted into the range-Doppler domain is used to represent the body posture.

As mentioned above, the radar aperture defines the cross-range resolution $\rho_a$ of the ISAR images. Specifically, $\rho_a = \frac{\lambda}{2\Delta\theta}$ with $\lambda$ being the wavelength $\Delta\theta = \omega t_a$ where $t_a$ is the aperture time. This means that an ISAR image with a finer resolution can be achieved if a longer processing time is used, i.e., by using more FMCW radar frames for the ISAR imaging algorithm. However, during this longer processing period time, the target may move to other range and/or cross-range cells or bins resulting in a blurred ISAR image. To compensate for that, a time-windowing 222 to optimize the radar aperture, e.g., in terms of image contrast, IC, may optionally be applied to the beat signal. Specifically, among the collected K radar frames, time-windowing gives the optimal set of chirps that should be used for image reconstruction:

$$N^*, n_o^* = arg \max_{N, n_o} IC\left[\text{2D-IFT}\left(s_C\left(t_f, t_s; N, n_o\right)\right)\right] \qquad (13)$$

, where $n_o$ denotes the offset from the beginning of the N collected chirps, and $n_o^*$ and $N^*$ respectively denote the resulting offset and selected chirps ensuring maximum contrast in the reconstructed ISAR image. Equation (13) states that ISAR imaging algorithm 210 may be performed for example for selected values of $N$ and $n_o$, resulting in obtaining ISAR images for the selected values. From these ISAR images, the image with the highest image contrast is then selected for the further processing.

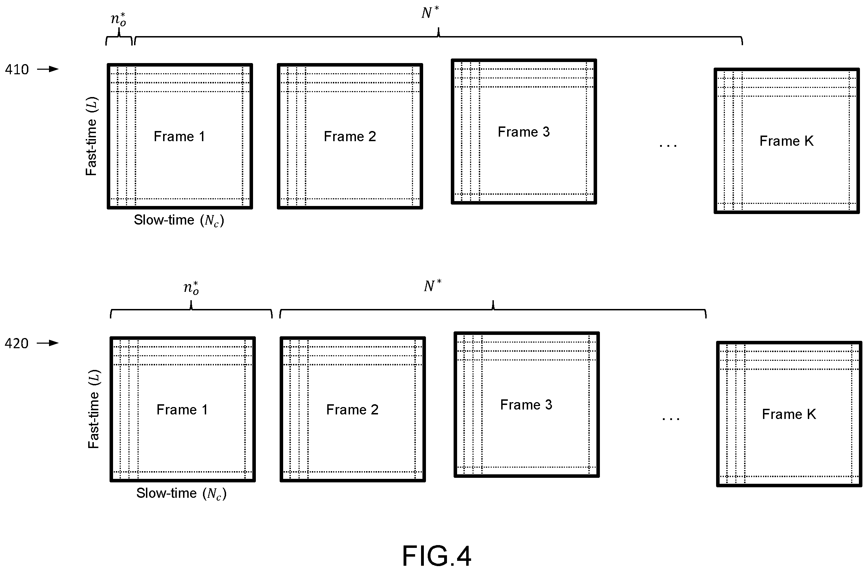

FIG.4 shows two examples resulting in maximum image contrast. In the first example, from the sequence 410 of total K FMCW radar frames, $N^*$ chirps from K radar frames are selected at an offset $n_o^*$ of three radar chirps. In the second example, from the sequence 420 of total K FMCW radar frames, $N^*$ chirps of K-2 radar frames are selected at an offset including $n_o^*$ chirps.

The number of FMCW chirps in the radar frames used by the ISAR imaging algorithm may be different from the number of chirps $N_c$ per frame in the obtained FMCW radar signal.

The combination of the time-windowing 222 and the autofocusing step 212 allows obtaining an optimally focused ISAR image of the moving target using only a single-input-single-output, SISO, FMCW radar, i.e., with one pair of a radar transmitter and a radar receiver. This is because in addition to the autofocus step, the time-windowing optimizes for the aperture size of the radar.

Furthermore, the method may optionally pre-processed 224 the beat signal to remove unwanted signals resulting from stationary targets before the optional time-windowing step 222. For example, signals resulting from static targets can be removed by subtracting the average of the chirps for a respective frame from all chirps in the frame. This is equivalent to ignoring zero-Doppler or stationary scatterers. Furthermore, in addition to stationary target removal, the pre-processing may further exploit any a priori knowledge, e.g., the waveform of the transmitted FMCW signal and/or the shape of the moving target to be imaged. The pre-processing will thus facilitate any post-processing of the obtained posture representation.

The respective resulting ISAR images are then post-processed 226 by means of an appropriate segmentation algorithm to extract the moving target so-called point cloud from the background. For this purpose, any density-based segmentation algorithm such as k-means or Otsu segmentation algorithm, may be used. However, these algorithms may not perform very well if the ISAR images exhibit a low signal-to-noise ratio, SNR, and a low image contrast. In such scenarios, a Rayleigh-based segmentation algorithm as described in Javadi et. al., "Rayleigh-based segmentation of ISAR images," Applied Optics, vol. 62, Issue 17, pp. F1-F7, 2023, which performs well in such cases is preferably used.

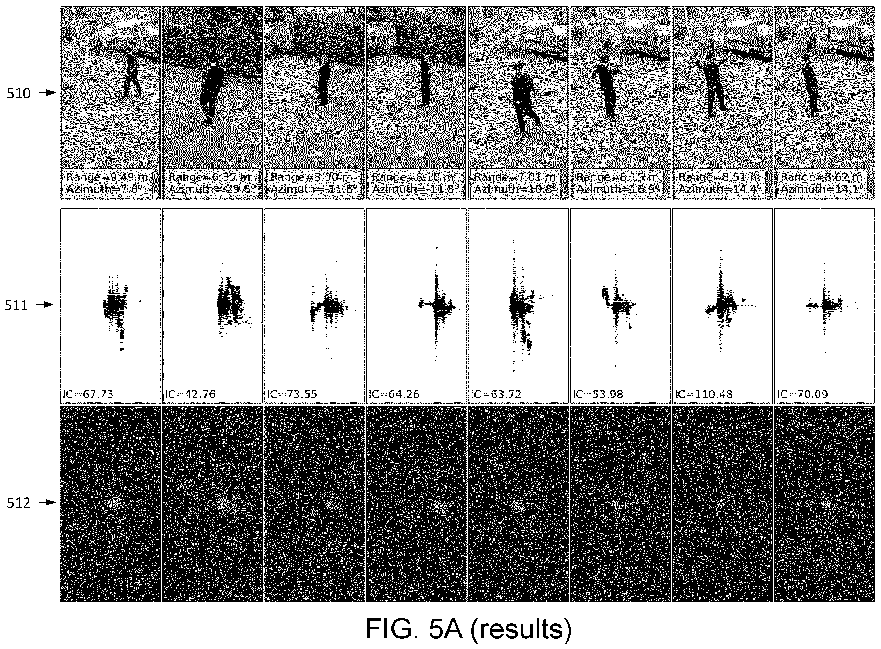

FIG.5A illustrates several examples of the magnitude of the complex-valued ISAR images 511 and the corresponding point clouds 512 of a person 10 imaged with the FMCW ISAR radar system 100 as well as the images 510 of the person captured with a camera. As detailed above with reference to FIG.1B above, since the ISAR images and therefore the corresponding point clouds are projections of the targets', i.e., the human, 3D point cloud on a 2D plane, the resulting images are different from how a photo camera, or a video camera images a target. The y axis of the 2D plane is always in the RLOS direction while the cross-range direction depends on the effective rotation of the target. For instance, in the 3rd and the 4th examples, the person rotates around himself which produces an effective rotation around an axis almost perpendicular to the ground. Therefore, the x-y plane becomes almost parallel to the ground resulting in ISAR images which look like a top view of the person. Similarly, in the 1st and the 5th examples, the person is walking and hence its effective rotation is almost perpendicular to its body, i.e., the torso, making the cross-range oriented in parallel to the body and hence the generated point clouds look as if they are obtained from the target's front.

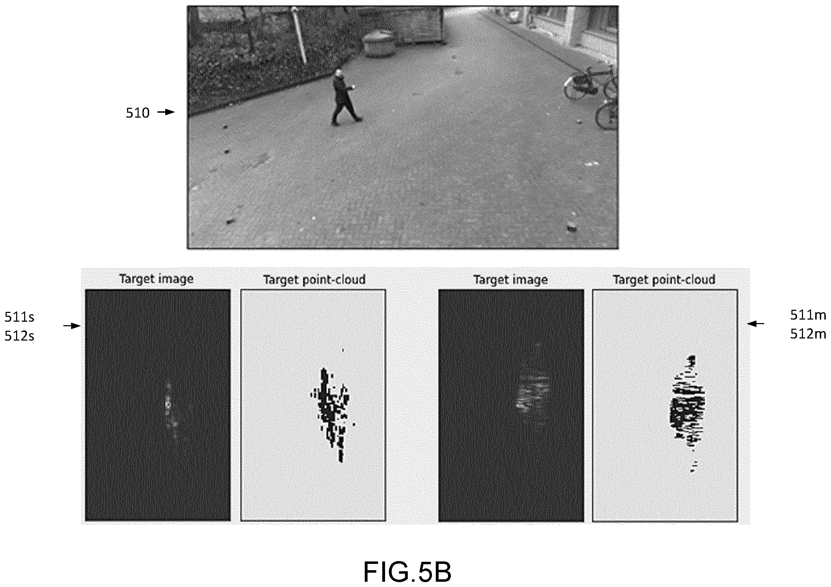

FIG.5B shows an ISAR image 511s and its corresponding point cloud 512s obtained with a SISO FMCW ISAR radar system and an ISAR image 511m and its corresponding point cloud 512m obtained with a MIMO FMCW ISAR radar system. It can be clearly seen that by incorporating phase compensation with the MIMO implementation of the FMCW ISAR radar system, the signal-to-noise ratio, SNR, of the ISAR image is significantly increased, which in turn further improves estimation of the posture representation.

As the carrier frequency change is considered in the reconstruction of the ISAR images, see Equation (9) above, the obtained ISAR images therefore extended in the range dimension resulting in further improved focus and a higher signal-to-noise ratio, SNR, point-clouds. Furthermore, the coherent summation of the images reconstructed by the virtual receivers in the MIMO radar gives more informative point clouds with a higher SNRs.

As detailed above, SISO FMCW radars provide a fine range resolution but lack any angular resolution, i.e., cross-range resolution. To provide cross-range resolution, a small footprint multiple-input multiple-receivers, MIMO, FMCW radar, using $k_{TX}$ transmitters or transmit antennas and $k_{RX}$ receivers or receive antennas resulting in

$$k_{VRX} \triangleq k_{TX} \times k_{RX}$$ virtual receivers, can be used.

Herein, to provide a fine range resolution with the required angular resolution, it is proposed to use a MIMO FMCW radar 110 with a limited number of antennas, e.g., two transmit and two receive antennas, in combination with overlaying the ISAR images obtained from the respective virtual antennas. To this end, phase compensation is essential for registering the received FMCW signals prior to performing the ISAR processing. Doing so allows obtaining ISAR images for respective virtual antennas aligned in the cross-range dimension which can then be overlayed or combined together to produce an ISAR image with a fine range and the required cross-range resolution.

The processing of the received FMCW radar signals in the case of a MIMO FMCW ISAR radar system will be now described with reference to FIG.2B and FIG.3C, wherein FIG.2B shows a block schematic of the method for imaging a moving target and for determining its posture representation and FIG.3C shows steps for obtaining ISAR images of the moving target in the case when a MIMO FMCW radar system is used.

In this example embodiment, it is assumed that FIG.1A now shows a MIMO FMCW radar 110 such as an FMCW radar comprising multiple spatially distanced antennas having a shared field of view or coverage area. The MIMO FMCW radar may, thus, comprise $k_{TX}$ number of transmitters TX 111, and $k_{RX}$ number of receivers RX 112, with $k_{TX} \geq 2$ and $k_{RX} \geq 2$. For example, the FMCW radar may comprise 2 transmitters and 4 receivers, i.e., $k_{TX} = 2$, $k_{RX} = 4$, realising an 8-element virtual receiver antenna array, $k_{VRX}$, 3 transmitters and 4 receivers, realising a 12-element virtual receiver antenna array,

$k_{VRX}$, or 4 transmitters and 4 receivers realising a 16-element $k_{VRX}$ array, i.e., $$k_{VRX} \triangleq k_{TX} \times k_{RX}$$ with typically $\lambda/2$ distance from each other to guarantee maximum field of view of the MIMO FMCW radar. An FMCW radar with 2 transmitters and 4 receivers offers sufficient cross-range resolution for applications such as public surveillance, automotive and gaming, however any other configurations are of course possible.

Similarly to the example embodiment described above, the FMCW signals received from the respective virtual antennas are collected in a radar data in the form of slow and fast times, i.e., $s_R(t_f,t_s)$. In this case, the radar data $s_R(t_f,t_s)$ is of size $(k_{elev} \times k_{azim}) \times N \times L = k_{VRX} \times N_c \times L$, where $k_{elev}$ and $k_{azim}$ respectively denote the number of virtual receiver antennas in elevation and azimuth, and, where $N_c$ is the number of received chirps per radar frame and $L$ is the number of samples per chirp.

The radar data $s_R(t_f,t_s)$ may be optionally pre-processed 224 to remove the static clutter as described above with reference to FIG.2A above. For simplicity, the pre-processing step is not shown in FIG.2B. Next, time-windowing 222 can be optionally applied to the pre-processed radar data as detailed above with reference to FIG.2A above. In this case, however, the time-windowing optimizes the radar's aperture size based on the virtual receive antenna with the highest SNR, i.e., the FMCW radar signals from the virtual antenna or antennas ensuring the highest image contrast, IC, value in the range - cross-range map is used for the ISAR processing. As a result, only the optimal set of FMCW chirps, i.e., $s'_R(t_f,t_s)$ = $k'_{VRX} \times N \times S$, ensuring maximum contrast in the reconstructed ISAR images are maintained. Note, this step can also be performed right before applying the ISAR imaging algorithm 220.

As detailed above, prior to the ISAR processing 210, the received signals need to be phase compensated. Phase compensation 262 is to be performed as the FMCW signals reflected from the target are received in all virtual receivers $k_{VRX}$ with a different phase delay. For the kth virtual antenna in the case of a linear virtual antenna receiver array, phase compensation can be done by compensating the phase delay in the received signal of virtual antenna k, $s_R^{(k)}$ as:

$$s_{BF}^{(k)} = s_R^{(k)} \, exp\left(j\frac{2\pi f}{c} kd\, sin\,\theta\right) \qquad (14)$$

, where $s_{BF}^{(k)}$ is the phase compensated signal, $kd\,sin(\theta)$ is the phase delay with $\theta$ being the azimuth of the target or the angle of arrival, AoA, of the signal reflected from the target and $d$ being the intern-antenna distance for the kth virtual receiver antenna.

Thus, to compensate for the phase delay, the azimuth $\theta$ of the target needs to be estimated. In this example embodiment, this is done as part of the tracking step 214 which estimates the azimuth $\theta$ of the target in addition to the initial range r estimation. The azimuth $\theta$ of the target can be estimated using any angle-of-arrival estimation algorithm such as the well-known MUSIC algorithm. The estimated azimuth $\theta$ is then used is step 262 to phase compensate the radar data $s'_R(t_f,t_s) = k'_{VRX} \times N_c \times L$ as expressed in Equation (14). The result is synchronized or coherent FMCW radar signals $s_R''(t_f,t_s) = k_{VRX}'' \times N_c \times L$, 310.

The coherent FMCW signals, i.e., the coherent radar data, $s_R''(t_f,t_s) = k_{VRX}'' \times N_c \times L$, is then ISAR processed in step 210 as described above with reference to FIG.2A. To convert the coherent radar data into range - cross-range map 360, first a radial motion compensation or autofocus 212 and then Fourier transform 2D-IFT 214 are performed. As further shown in FIG.3C, the autofocus 212 produces a set of radial motion compensated radar data 320 for each virtual antenna, which after the 2D-IFFT Fourier transformation in step 214 is converted into a set of ISAR images 340 in the time-Doppler domain with one ISAR image for each virtual receiver antenna.

As a last step of the processing, the obtained set of ISAR images 340 are overlayed or combined in step 264 by for example summing them together to obtain the resulting ISAR image of the moving target. Note, that this step is not shown in FIG.3C for simplicity reasons. After this step, the ISAR image can be optionally post-processed 226 as described above with reference to FIG.2A above. Again, for simplicity, this step is not shown in FIG.2B.

As the carrier frequency change is considered in the reconstruction of the ISAR images, see Equation (9) above, the obtained ISAR images are extended in the range dimension resulting in further improved focus and a higher signal-to-noise ratio, SNR, point-clouds. Furthermore, the coherent summation of the images reconstructed by the virtual receivers in the MIMO radar gives more informative point clouds with a higher SNRs.

The processing unit 120 may further process the posture representation of the moving target obtained by either of the example embodiments to derive at least one of an action detection, activity recognition and behaviour analysis of the moving target. The processing may be performed by any suitable for the purpose algorithms, such as the algorithms described in S. Yan, Y. Xiong, D. Lin, "Spatial Temporal Graph Convolutional Networks for Skeleton-Based Action Recognition", AAAI, p., 2018, and, Y. Seo and Y. Choi, "Graph Convolutional Networks for Skeleton-Based Action Recognition with LSTM Using Tool-Information," Proceedings of the 36th Annual ACM Symposium on Applied Computing (SAC '21), pp. 986-993 , 2021, may be employed for recognizing the performed action. The FMCW ISAR radar system 100 is thus a system capable of imaging the moving target which enables its further augmentation for various use case scenarios.

The method according to the present disclosure can provide a high-resolution imaging and optimally focused ISAR images which in turn allows to obtain an accurate image representation of a moving target such as a human or an animal by using a SISO FMCW ISAR radar system even if the moving target is observed with the radar system from afar. Thus, the method further enables the use of the proposed radar system in various applications such as automotive, public surveillance, gaming and so on, where activity recognition, behaviour analysis, etc. are key. Further, by using a MIMO FMCW ISAR radar system in combination with beamform processing, the SNR of the imaging and therefore the accuracy of the posture representation is further improved.

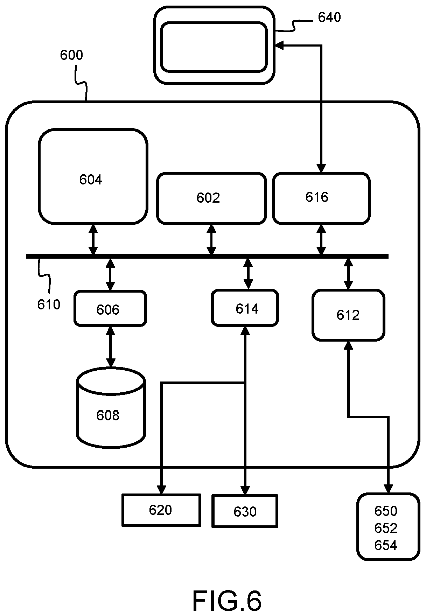

Embodiments of the method for detecting a moving target and for deriving a body representation of the moving target as described above with reference to FIG.2A and FIG.2B above can be performed by means of a computing system programmed to perform steps of the method. In other words, the computing system is suitable for performing the various functionalities of processing unit 120 described above. The computing system can for example comprise at least one processor and at least one memory. The at least one memory stores program code which comprises computer-executable instructions which together with the at least one processor cause the computing system to perform the steps of the method. That is, the method can be entirely implemented as a computer-implemented method. An example of such computing system is shown in FIG.6. As shown in the figure, the computing system 600 may, in general, be formed as a suitable general-purpose computer and comprise a bus 610, a processor 602, a local memory 604, one or more optional input interfaces 614, one or more optional output interfaces 616, a communication interface 612, a storage element interface 706, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory, RAM, or another type of dynamic storage device that stores information and instructions for execution by processor 602 and/or read-only memory, ROM, or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 650, 652, 654. The communication interface 612 of computing system 600 may be connected to such another computing system by means of a local area network, LAN, or a wide area network, WAN, such as for example the internet. Storage element interface 606 may comprise a storage interface such as for example a Serial Advanced Technology Attachment, SATA, interface or a Small Computer System Interface, SCSI, for connecting bus 610 to one or more storage elements 608, such as one or more local disks, for example, SATA disk drives, and control the reading and writing of data to and/or from these storage elements 608. Although the storage element(s) 608 above is/are described as a local disk, in general, any other suitable computer-readable media such as a removable magnetic disk, optical storage media such as a CD or DVD, -ROM disk, solid-state drives, flash memory cards, ... could be used. The computing system 600 could thus also correspond to a circuitry configured to implement the embodiments of the method as illustrated by FIG.2A and FIG.2B.

As used in this application, the term "circuitry" may refer to one or more or all of the following:

(a) hardware-only circuit implementations such as implementations in only analog and/or digital circuitry and

(b) combinations of hardware circuits and software, such as (as applicable):

(i) a combination of analog and/or digital hardware circuit(s) with software/firmware and

(ii) any portions of hardware processor(s) with software, including digital signal processor(s), software and memory(ies) that work together to cause an apparatus, such as a mobile phone or server, to perform various functions, and

(c) hardware circuit(s) and/or processor(s), such as microprocessor(s) or a portion of a microprocessor(s), that require software such as firmware for operation, but the software may not be present when it is not needed for operation.

This definition of circuitry applies to all uses of this term in this application, including any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example, and if applicable to a particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1.  A method of imaging a moving object in an environment by means of a FMCW radar configured to transmit via a plurality of transmit antennas respective FMCW radar signals comprising FMCW radar chirps into the environment and to receive via a plurality of receive antennas reflections of the respective FMCW radar signals from the moving object in the environment, the method comprising the steps of:

    - obtaining, from the FMCW radar, reflections of the respective FMCW radar signals, the received reflected FMCW radar signals;
    - deriving, from the received reflected FMCW radar signals and the spatial diversity of the receive antennas, coherent FMCW radar signals;
    - calculating, from the received reflected FMCW radar signals, a radial motion of the moving object observed across the radar chirps of the received reflected FMCW radar signals; and
    - applying an inverse synthetic aperture radar, ISAR, processing to the coherent FMCW radar signals to obtain respective ISAR images of the moving object, wherein the ISAR processing takes into account the estimated radial motion of the moving object; and
    - combining the respective ISAR images of the moving object, thereby obtaining an image representation of the moving object.

2.  The method of imaging a moving object according to claim 1, wherein step of deriving coherent FMCW radar signals comprises:

    - compensating the received reflected FMCW radar signals for delay variations between the received reflected FMCW radar signals across the receive antennas.

3.  The method of imaging a moving object according to claim 2, wherein step of compensating comprises:

    - estimating, from the received FMCW radar signals, delays of arrival of the received FMCW radar signals across the receive antennas, the delays of arrival characterizing the distance between the moving object and receive antennas; and
    - correcting the received reflected FMCW radar signals with the estimated delays of arrival and the spatial diversity of the receive antennas, thereby obtaining the coherent FMCW radar signals.

4.  The method of imaging a moving object according to any one of the preceding claims, wherein step of calculating a radial motion of the moving object comprises:

- deriving, from the received reflected FMCW radar signals, the range of the moving object across the FMCW radar chirps, thereby obtaining the radial motion of the moving object across the radar chirps.

5. The method of imaging a moving object according to any one of the preceding claims, wherein step of applying ISAR processing comprises:

- correcting the coherent FMCW radar signals with the estimated radial motion of the moving object, thereby obtaining coherent and motion compensated FMCW radar signals;
- inverse Fourier transforming the coherent and motion compensated FMCW radar signals, thereby obtaining range and cross range information for respective receive antennas, the range and cross range information comprising an image representation of the moving object.

6. The method of imaging a moving object according to any of the preceding claims, the method further comprising suppressing static clutter in the respective received reflected FMCW radar signals, wherein the suppressing comprising deriving average of chirps for respective radar frames in the respective FMCW radar signals and subtracting the average of chirps from the chirps in the respective radar frames.

7. The method of imaging a moving object according to claim 6, wherein the step of suppressing is performed before the step of deriving coherent FMCW radar signals.

8. The method of imaging a moving object according to any of the preceding claims, wherein the method further comprises:

- selecting radar chirps from radar frames for respective received reflected FMCW radar signals, the selected radar chirps forming sets of consecutive radar chirps for respective FMCW radar signals, wherein the selecting is based on an objective function maximizing the contrast observed in the image representation of the moving object reconstructed using the ISAR processing and the selected radar chirps.

9. The method of imaging a moving object according to claim 8, wherein the step of selecting is performed before the step of applying an ISAR processing.

10. The method of imaging a moving object according to any of the preceding claims, the method further comprising suppressing noise in the image representation of the moving object.

11. A FMCW radar system for imaging a moving object in an environment, the FMCW radar system comprising:

- an FMCW radar configured to transmit via a plurality of transmit antennas respective FMCW radar signals comprising FMCW radar chirps into the environment and to receive via a plurality of receive antennas reflections of the respective FMCW radar signals from the moving object in the environment;
- a compensation unit configured to derive from the received reflected FMCW radar signals and the spatial diversity of the receive antennas, coherent FMCW radar signals;
- a motion calculation unit configured to calculate from the received reflected FMCW radar signals a radial motion of the moving object observed across the radar chirps of the reflected FMCW radar signals;
- an inverse aperture processing unit configured to perform an inverse synthetic aperture radar, ISAR, processing on the respective coherent FMCW radar signals to obtain respective ISAR images of the moving object, wherein the ISAR processing takes into account the estimated radial motion of the moving object across the radar chirps; and
- a combination unit configured to combine the ISAR images of the moving object to obtain an image representation of the moving object.

12. A data processing system programmed for carrying out the method according to any one of claims 1 to 10.

13. A computer program product comprising computer-executable instructions for causing a data processing system or a FMCW radar system to perform the method according to any one of claims 1 to 10.

14. A computer readable storage medium comprising computer-executable instructions for performing the method according to any one of claims 1 to 10 when the program is run on a data processing system or an FMCW radar system.

FIG.1A

FIG.1B

FIG.1C

EP 4 488 718 A1

FIG.2A

200

Radar cube $s_R(t_f, t_s)$ → Pre-processing 224 → Time windowing 222 → 210 [Autofocus 212 → Computing 2D-FFT 214] → Post-processing 226 → cloud points — 20

Tracking 216 → Range, $r$ → Autofocus 212

FIG.2B

200

Radar cube $s_R(t_f, t_s)$ → Time windowing 222 → Phase compensation 262 → 210 [Autofocus 212 → Computing 2D-FFT 214] → Image summation 264 → cloud points — 20

Tracking 216 → Azimuth, $\theta$ → Phase compensation 262

Tracking 216 → Range, $r$ → Autofocus 212

310

320

330

340

| Fast-time ($L$) | pre-processed radar data | | AF | Fast-time ($L$) | Radial motion compensated data | | FFT | Range ($L$) | Data | | FFT | Range ($L$) | Data |

Slow-time ($N_c$)

Slow-time ($N_c$)

Slow-time ($N_c$)

Doppler ($N_c$)

Doppler ($N_c$)

Range ($L$)

Probably belonging to subject.

Level (dB)

Density

FIG.3A

FIG.3B

FIG.3C

410 →

$n_o^*$   $N^*$

Fast-time ($L$)

| Frame 1 | Frame 2 | Frame 3 | . . . | Frame K |

Slow-time ($N_c$)

420 →

$n_o^*$   $N^*$

Fast-time ($L$)

| Frame 1 | Frame 2 | Frame 3 | . . . | Frame K |

Slow-time ($N_c$)

FIG.4

FIG. 5A (results)

FIG.5B

FIG.6

EP 4 488 718 A1

## EUROPEAN SEARCH REPORT

**Application Number**

EP 23 18 3923

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JAVADI S. HAMED ET AL: "Rayleigh-based segmentation of ISAR images", APPLIED OPTICS, vol. 62, no. 17, 24 February 2023 (2023-02-24), page F1, XP093103941, US ISSN: 1559-128X, DOI: 10.1364/AO.482527 Retrieved from the Internet: URL:https://opg.optica.org/view_article.cfm?pdfKey=53879b12-d8af-4b0a-87e2134f81832d1a_526980> * the whole document * | 1-14 | INV. G01S13/34 G01S13/90 |
| A | US 2016/209506 A1 (LONGSTAFF DENNIS IAN [AU] ET AL) 21 July 2016 (2016-07-21) * the whole document * | 1-14 | |
| A | US 2019/302252 A1 (SANTRA AVIK [DE] ET AL) 3 October 2019 (2019-10-03) * the whole document * | 1-14 | |
| | | | **TECHNICAL FIELDS SEARCHED (IPC)** |
| A | KR 102 212 468 B1 (HANWHA SYSTEMS CO LTD [KR]; IUCF KOREA AEROSPACE UNIV [KR]) 4 February 2021 (2021-02-04) * the whole document * | 1-14 | G01S |

The present search report has been drawn up for all claims

| Place of search | Date of completion of the search | Examiner |
|---|---|---|
| Munich | 21 November 2023 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 3923**

This annex lists the patent family members relating to the patent documents cited in the above-mentioned European search report.
The members are as contained in the European Patent Office EDP file on
The European Patent Office is in no way liable for these particulars which are merely given for the purpose of information.

**21-11-2023**

| Patent document cited in search report | | Publication date | Patent family member(s) | | Publication date |
|---|---|---|---|---|---|
| US 2016209506 | A1 | 21-07-2016 | AU | 2014317791 A1 | 17-03-2016 |
| | | | EP | 3042219 A1 | 13-07-2016 |
| | | | US | 2016209506 A1 | 21-07-2016 |
| | | | WO | 2015031934 A1 | 12-03-2015 |
| US 2019302252 | A1 | 03-10-2019 | NONE | | |
| KR 102212468 | B1 | 04-02-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MARTORELLA**. Contrast maximisation-based technique for 2D ISAR autofocusing. *IEE Proceedings - Radar, Sonar and Navigation*, August 2005, vol. 152 (9), 253-262
- **JAVADI**. Rayleigh-based segmentation of ISAR images. *Applied Optics*, 2023, vol. 62 (17), F1-F7
- **S. YAN** ; **Y. XIONG** ; **D. LIN**. Spatial Temporal Graph Convolutional Networks for Skeleton-Based Action Recognition. *AAAI*, 2018
- **Y. SEO** ; **Y. CHOI**. Graph Convolutional Networks for Skeleton-Based Action Recognition with LSTM Using Tool-Information. *Proceedings of the 36th Annual ACM Symposium on Applied Computing (SAC '21)*, 2021, 986-993